# EUROPEAN PATENT APPLICATION

(11) **EP 4 789 740 A1**
(43) Date of publication of application: **12.08.2026**
(21) Application number: 23954727.6
(22) Date of filing: 03.10.2023
(51) Int. Cl.: A63F 13/90, A63F 13/215, H04R 3/00

(54) **GAME APPARATUS**

(71) Applicant: Nintendo Co., Ltd., Kyoto-shi, Kyoto 601-8501 (JP)
(72) Inventor: IKUTA, Hiroki, Kyoto-shi, Kyoto 601-8501 (JP); GOTO, Hiroki, Kyoto-shi, Kyoto 601-8501 (JP); MINOWA, Nobuya, Kyoto-shi, Kyoto 601-8501 (JP); HIROSE, Shinji, Kyoto-shi, Kyoto 601-8501 (JP)
(74) Representative: Bardehle Pagenberg Partnerschaft mbB Patentanwälte Rechtsanwälte
(86) International application number: PCT/JP2023/036114
(87) International publication number: WO 2025/074515

(57) **Abstract**

A game device reduces noise in the sound traveling through a microphone opening. The game device includes a housing, a microphone located in the housing, and an air vent, a microphone opening, an operation button, and a card-slot opening in a first side surface of the housing. The air vent is located between the microphone opening and an input button and between the card-slot opening and the input button in a longitudinal direction of the first side surface. The card-slot opening is located between the microphone opening and the air vent in the longitudinal direction of the first side surface.

## Description

### TECHNICAL FIELD

The present disclosure relates to a game device having a microphone opening.

### BACKGROUND ART

Patent Literature 1 describes an electronic device having a microphone opening that functions as a sound collection hole for a microphone incorporated in the body case. Examples of such electronic devices include game devices.

### PRIOR ART DOCUMENTS

### PATENT LITERATURE

Patent Literature 1: JP-A-2015-115662

### SUMMARY OF THE INVENTION

### PROBLEMS TO BE SOLVED BY THE INVENTION

Game devices are to be improved to reduce noise in the sound input into the microphone through the microphone opening.

In response to the above issue, one or more aspects of the present disclosure are directed to a game device that reduces noise in the sound traveling through the microphone opening.

### SOLUTIONS TO THE PROBLEMS

In response to the above, a game device according to an aspect of the present disclosure includes a housing, a microphone, an air vent, a microphone opening, an operation button, and a card-slot opening. The housing has a front surface on which a display is located, a back surface spaced from the front surface in a depth direction and facing away from the front surface, a first side surface connecting the front surface and the back surface, and a second side surface connecting the front surface and the back surface, spaced from the first side surface in a height direction, and facing away from the first side surface. The depth direction is perpendicular to the front surface. The height direction is perpendicular to the depth direction. The microphone is located in the housing. The air vent is in the first side surface or the back surface to allow air to flow between an inside and an outside of the housing. The microphone opening is in the first side surface to expose the microphone to the outside of the housing. The operation button is on the first side surface. The card-slot opening is in the first side surface. The air vent is located between the microphone opening and the operation button and between the card-slot opening and the operation button in a longitudinal direction of the first side surface. The card-slot opening is located between the microphone opening and the air vent in the longitudinal direction of the first side surface.

### EFFECTS OF THE INVENTION

The game device according to the above aspect of the present disclosure reduces noise in the sound traveling through the microphone opening.

### BRIEF DESCRIPTION OF THE DRAWINGS

Fig. 1 is a schematic perspective view of a game device set according to an embodiment of the present disclosure.
Fig. 2 is a schematic front view of a game device according to the embodiment of the present disclosure.
Fig. 3 is a schematic perspective view of the game device according to the embodiment of the present disclosure.
Fig. 4 is a schematic perspective view of the game device according to the embodiment of the present disclosure.
Fig. 5 is a schematic side view of the game device according to the embodiment of the present disclosure.
Fig. 6 is a schematic plan view of the game device according to the embodiment of the present disclosure.
Fig. 7 is a cross-sectional view taken along line VII-VII in Fig. 6.
Fig. 8 is an enlarged view of the portion enclosed by the dashed line in Fig. 7.
Fig. 9 is a schematic plan view of a cradle according to the embodiment of the present disclosure.

### DETAILED DESCRIPTION

A game device according to a first aspect of the present disclosure includes a housing, a microphone, an air vent, a microphone opening, an operation button, and a card-slot opening. The housing has a front surface on which a display is located, a back surface spaced from the front surface in a depth direction and facing away from the front surface, a first side surface connecting the front surface and the back surface, and a second side surface connecting the front surface and the back surface, spaced from the first side surface in a height direction, and facing away from the first side surface. The depth direction is perpendicular to the front surface. The height direction is perpendicular to the depth direction. The microphone is located in the housing. The air vent is in the first side surface or the back surface to allow air to flow between an inside and an outside of the housing. The microphone opening is in the first side surface to expose the microphone to the outside of the housing. The operation button is on the first side surface. The card-slot opening is in the first side surface. The air vent is located between the microphone opening and the operation button and between the card-slot opening and the operation button in a longitudinal direction of the first side surface. The card-slot opening is located between the microphone opening and the air vent in the longitudinal direction of the first side surface.

A game device according to a second aspect of the present disclosure is the game device according to the first aspect in which the game device includes, between the microphone opening and the air vent in the longitudinal direction of the first side surface, no operable portion other than the operation button.

A game device according to a third aspect of the present disclosure is the game device according to the first aspect or the second aspect in which the microphone has a sound-capturing hole to capture sound. The game device further includes a channel connecting the microphone opening and the sound-capturing hole. The sound-capturing hole is offset from the microphone opening when viewed in a direction perpendicular to the first side surface. The channel has an outer opening adjacent to the microphone opening and an inner opening adjacent to the sound-capturing hole. A part of the outer opening overlaps a part of the inner opening when viewed in the direction perpendicular to the first side surface.

A game device according to a fourth aspect of the present disclosure is the game device according to any one of the first to third aspects in which the microphone has a sound-capturing hole to capture sound. The sound-capturing hole is located, in the longitudinal direction of the first side surface, opposite to the air vent with respect to the microphone opening located between the sound-capturing hole and the air vent.

A game device according to a fifth aspect of the present disclosure is the game device according to any one of the first to fourth aspects further including a first connector opening in the first side surface. The first connector opening is connectable to an external connector. The first connector opening is located between the air vent and the card-slot opening in the longitudinal direction of the first side surface.

A game device according to a sixth aspect of the present disclosure is the game device according to any one of the first to fifth aspects further including an audio-terminal receiving opening in the first side surface to receive an audio input-output terminal. The audio-terminal receiving opening is located between the air vent and the card-slot opening in the longitudinal direction of the first side surface.

A game device according to a seventh aspect of the present disclosure is the game device according to any one of the first to sixth aspects further including an optical sensor on the first side surface. The optical sensor is located between the operation button and the air vent in the longitudinal direction of the first side surface.

A game device according to an eighth aspect of the present disclosure is the game device according to any one of the first to seventh aspects further including a stand supported by the back surface in a pivotable manner. The stand is pivotable to be in an open orientation in which a pivotally movable end of the stand is away from the back surface. When the stand is in the open orientation, the game device stands on a placement surface in a self-supporting manner with the second side surface and the pivotally movable end of the stand in contact with the placement surface.

A game device according to a ninth aspect of the present disclosure is the game device according to any one of the first to eighth aspects further including a first operation device and a second operation device attachable to and detachable from the housing. The housing has a third side surface and a fourth side surface. The third side surface connects the front surface and the back surface and connects a first end of the first side surface in the longitudinal direction and a first end of the second side surface. The fourth side surface connects the front surface and the back surface and connects a second end of the first side surface in the longitudinal direction and a second end of the second side surface. The first operation device is attachable to and detachable from the third side surface. The second operation device is attachable to and detachable from the fourth side surface. The first operation device includes a first operation button on a first adjacent surface. The first adjacent surface is a surface of the first operation device adjacent to the first end of the first side surface when the first operation device is attached to the third side surface. The second operation device includes a second operation button on a second adjacent surface. The second adjacent surface is a surface of the second operation device adjacent to the second end of the first side surface when the second operation device is attached to the fourth side surface.

A game device according to a tenth aspect of the present disclosure is the game device according to any one of the first to ninth aspects further including a second connector opening in the second side surface. The second connector opening is connectable to a cradle.

A game device according to an eleventh aspect of the present disclosure is the game device according to the tenth aspect in which, when the cradle including a cradle air vent to allow air to flow between an inside and an outside of the cradle is connected to the second connector opening, the microphone opening is offset from the cradle air vent in a lateral direction of the first side surface.

A game device according to a twelfth aspect of the present disclosure is the game device according to the eleventh aspect in which the first side surface faces in a same direction as the cradle air vent when the cradle is connected to the second connector opening.

A game device according to a thirteenth aspect of the present disclosure is the game device according to any one of the tenth to twelfth aspects in which, when the cradle is connected to the second connector opening, at least a part of the front surface, at least a part of the back surface, and at least a part of the second side surface are covered by the cradle.

Embodiments of the present invention will now be described with reference to the drawings. The present invention is not limited to the embodiments. In the drawings, like reference numerals denote substantially the same components.

For ease of explanation, directional terms such as up, down, lateral, vertical, and height are used herein to describe the components in typical use. These terms are not intended to limit the use or other situations of a game device and a game device set according to one or more embodiments of the present invention.

### (Embodiments)

The structures of a game device set and a game device according to an embodiment of the present disclosure will now be described. The game device is a substantially rectangular prism and includes a display. In particular, in the present embodiment, the game device is a portable device that is placed on a placement surface, such as a floor or a desk, or held by a user when used. The game device may have features other than gaming. For example, the game device may be a personal computer (PC) that can execute games, such as a portable gaming PC. A game process may be executed on a console or a cloud server separate from the game device, instead of being executed on the game device. In this case, for example, the game device displays, on the display, images and videos generated through the process executed on the separate console or cloud server.

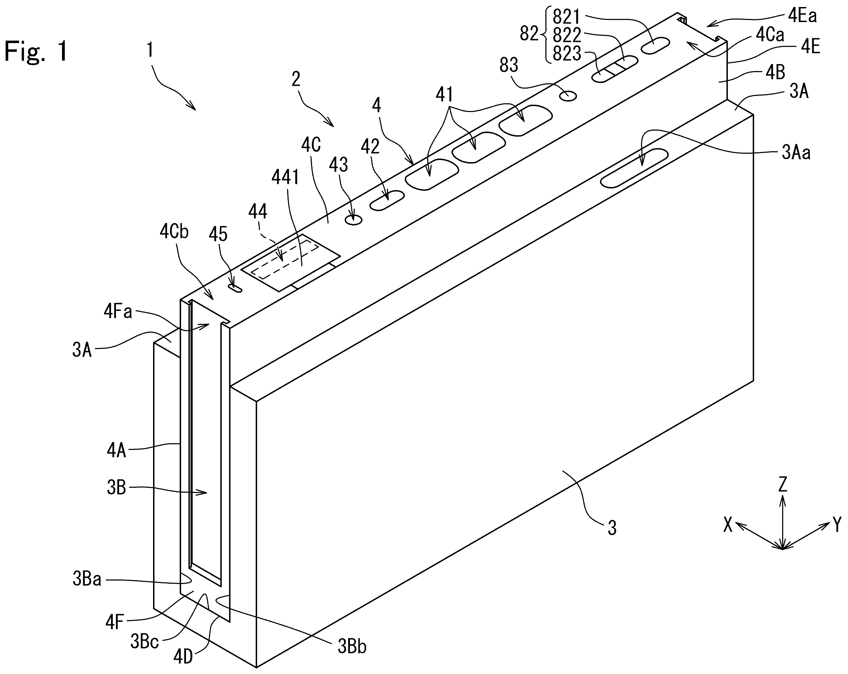

Fig. 1 is a schematic perspective view of the game device set according to the embodiment of the present disclosure. As shown in Fig. 1, a game device set 1 according to the present embodiment includes a game device 2 and a cradle 3. The game device 2 is attachable to and detachable from the cradle 3. The game device 2 may not be attachable to and detachable from the cradle 3. The game device 2 will now be described in detail. The cradle 3 will be described in detail later.

For ease of explanation, the game device set 1 has a depth direction referred to as the X-direction, a width direction as the Y-direction, and a height direction as the Z-direction herein and in the drawings. The X-direction, the Y-direction, and the Z-direction are perpendicular to one another.

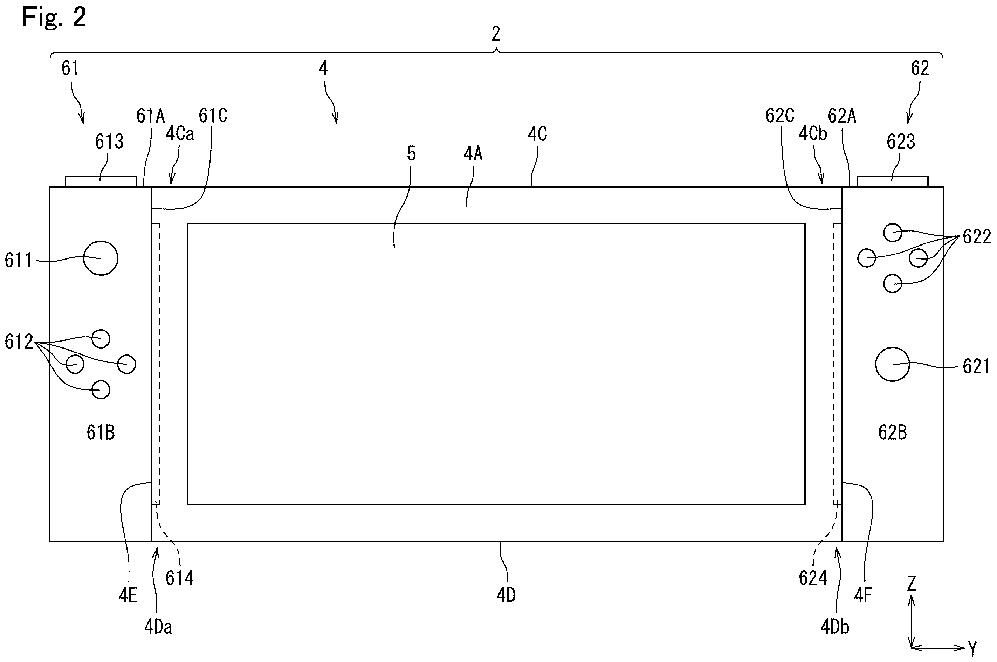

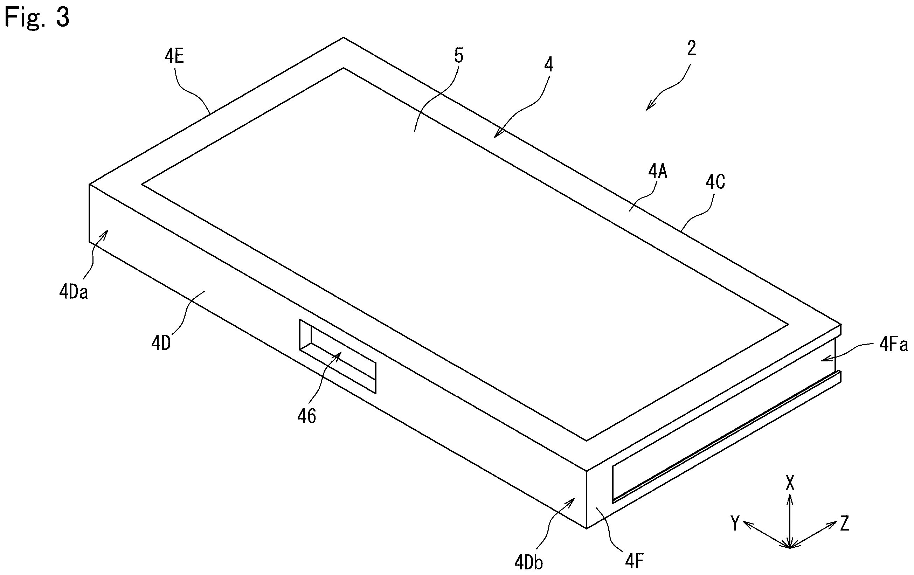

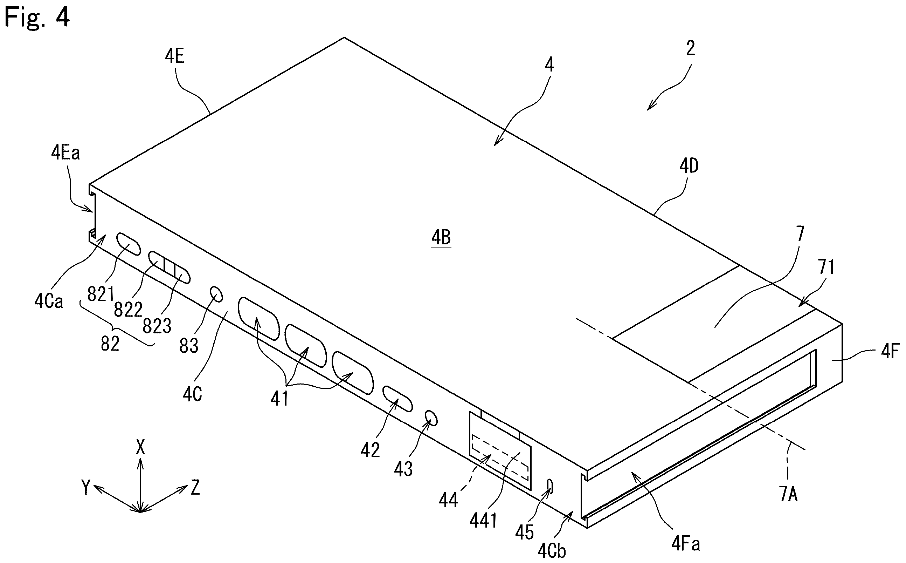

Fig. 2 is a schematic front view of the game device according to the embodiment of the present disclosure. Fig. 3 is a schematic perspective view of the game device according to the embodiment of the present disclosure. Fig. 4 is a schematic perspective view of the game device according to the embodiment of the present disclosure. As shown in Figs. 2 to 4, the game device 2 according to the present embodiment includes a housing 4, a display 5, a first operation device 61, a second operation device 62, and a stand 7. The game device 2 may include one of the first operation device 61 or the second operation device 62 alone, or may include neither the first operation device 61 nor the second operation device 62. The game device 2 may include no stand 7.

As shown in Figs. 3 and 4, the housing 4 is a substantially rectangular prism. The housing 4 may be an integrally molded single member or may be a combination of multiple members. The housing 4 has an internal space. As described later, the internal space accommodates various components. The housing 4 has a front surface 4A, a back surface 4B, four side surfaces (a first side surface 4C, a second side surface 4D, a third side surface 4E, and a fourth side surface 4F).

The front surface 4A and the back surface 4B are spaced from each other in the X-direction perpendicular to the front surface 4A. The front surface 4A and the back surface 4B face away from each other.

Each of the four side surfaces connects the front surface 4A and the back surface 4B.

The first side surface 4C and the second side surface 4D are spaced from each other in the Z-direction. The first side surface 4C and the second side surface 4D face away from each other. The first side surface 4C and the second side surface 4D each have a longitudinal direction aligned with the Y-direction and a lateral direction aligned with the X-direction.

As shown in Fig. 2, the third side surface 4E connects a first end 4Ca of the first side surface 4C in the Y-direction and a first end 4Da of the second side surface 4D in the Y-direction. The fourth side surface 4F connects a second end 4Cb of the first side surface 4C in the Y-direction and a second end 4Db of the second side surface 4D in the Y-direction. As shown in Figs. 3 and 4, the third side surface 4E and the fourth side surface 4F are spaced from each other in the Y-direction. The third side surface 4E and the fourth side surface 4F face away from each other.

The display 5 shown in Figs. 2 and 3 is located in the internal space of the housing 4. The display 5 is, for example, a liquid crystal display or an organic electroluminescent (EL) display to display images and videos. As shown in Figs. 2 and 3, the front surface 4A of the housing 4 has an opening in a portion other than the outer edge. The display 5 is exposed to the outside of the housing 4 through the opening. This allows, for example, images and videos on the display 5 to be viewable from outside the game device 2. The game device 2 may allow, for example, images and videos to be displayed on an external display such as a television. In this case, for example, the game device 2 includes a High-Definition Multimedia Interface (HDMI, registered trademark) terminal. The game device 2 is connected to the external display with an HDMI cable.

The first operation device 61 and the second operation device 62 shown in Fig. 2 are used to operate the game device 2. A single user may play a game executed on the game device 2 using at least one of the first operation device 61 or the second operation device 62. Two users may play a game executed on the game device 2, with one user using the first operation device 61 and the other user using the second operation device 62. Another operation device different from the first operation device 61 and the second operation device 62 may be used to operate the game device 2. In this case, three or more users can play a game executed on the game device 2. For example, three users may play a game executed on the game device 2, with a first user using the first operation device 61, a second user using the second operation device 62, and a third user using the other operation device. The first operation device 61, the second operation device 62, and the other operation device may allow a remote operation of the game device 2 through a network such as the Internet. In this case, multiple users at different locations can play a game executed on the game device 2.

In the present embodiment, as shown in Fig. 2, the first operation device 61 includes a stick 611, front operation buttons 612, and a side operation button 613 used for operations. The second operation device 62 includes a stick 621, front operation buttons 622, and a side operation button 623 used for operations. The stick 611 and the front operation buttons 612 are located on a front surface 61B of the first operation device 61. The side operation button 613 is located on a side surface 61A of the first operation device 61. The side operation button 613 is an example of a first operation button. The side surface 61A is an example of a first adjacent surface. The stick 621 and the front operation buttons 622 are located on a front surface 62B of the second operation device 62. The side operation button 623 is located on a side surface 62A of the second operation device 62. The side operation button 623 is an example of a second operation button. The side surface 62A is an example of a second adjacent surface.

The first operation device 61 and the second operation device 62 are attachable to and detachable from the housing 4, which is the body of the game device 2. The first operation device 61 is attachable to and detachable from the third side surface 4E of the housing 4. The second operation device 62 is attachable to and detachable from the fourth side surface 4F of the housing 4. The structure for attaching and detaching the first operation device 61 and the second operation device 62 to and from the housing 4 in the present embodiment is described below. The structure for attaching and detaching the first operation device 61 and the second operation device 62 to and from the housing 4 is not limited to the structure described below. The first operation device 61 and the second operation device 62 may be fixed to the housing 4, instead of being attachable to and detachable from the housing 4.

The first operation device 61 includes a protrusion 614 on a side surface 61C different from the side surface 61A. The protrusion 614 extends in the longitudinal direction of the side surface 61C. The second operation device 62 includes a protrusion 624 on a side surface 62C different from the side surface 62A. The protrusion 624 extends in the longitudinal direction of the side surface 62C. As shown in Fig. 1, the housing 4 has a groove 4Ea extending in the Z-direction on the third side surface 4E and a groove 4Fa extending in the Z-direction on the fourth side surface 4F. The first operation device 61 is attached to the third side surface 4E of the housing 4 when the protrusion 614 is slid in one of the two opposite directions aligned with the Z-direction and received into the groove 4Ea. The second operation device 62 is attached to the fourth side surface 4F of the housing 4 when the protrusion 624 is slid in one of the two opposite directions aligned with the Z-direction and received into the groove 4Fa. The first operation device 61 and the second operation device 62 are detached from the housing 4 when slid in the other of the two opposite directions aligned with the Z-direction.

As shown in Fig. 2, the side surface 61A of the first operation device 61 on which the side operation button 613 is located is adjacent to the first end 4Ca of the first side surface 4C of the housing 4 when the first operation device 61 is attached to the third side surface 4E of the housing 4. The side surface 62A of the second operation device 62 on which the side operation button 623 is located is adjacent to the second end 4Cb of the first side surface 4C of the housing 4 when the second operation device 62 is attached to the fourth side surface 4F of the housing 4.

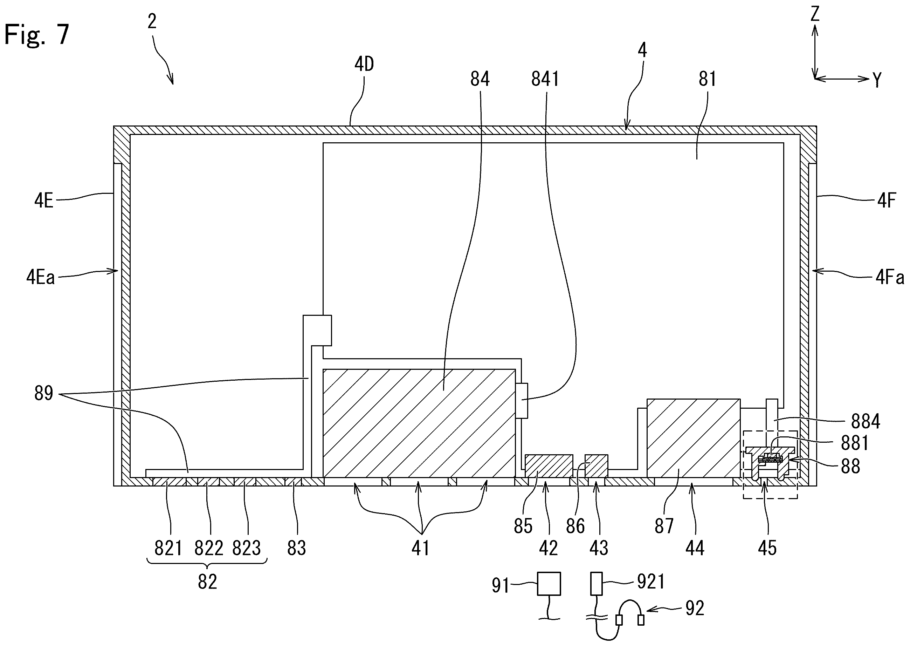

The first operation device 61 and the second operation device 62 are electrically connected to the body of the game device 2 (specifically, a board 81 in the body shown in Fig. 7) wirelessly. The first operation device 61 and the second operation device 62 may be electrically connected to the body of the game device 2 with wires.

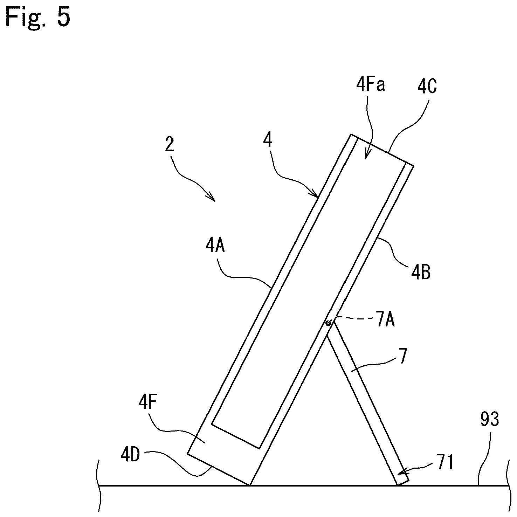

Fig. 5 is a schematic side view of the game device according to the embodiment of the present disclosure. As shown in Figs. 4 and 5, the stand 7 is supported by the back surface 4B of the housing 4 in a manner pivotable about a pivot axis 7A. The stand 7 is pivotable between a closed orientation shown in Fig. 4 and an open orientation shown in Fig. 5. When the stand 7 is in the closed orientation shown in Fig. 4, a pivotally movable end 71 of the stand 7 is in contact with the back surface 4B of the housing 4. In this state, the stand 7 defines a part of the back surface 4B. When the stand 7 is in the open orientation shown in Fig. 5, the pivotally movable end 71 of the stand 7 is away from the back surface 4B of the housing 4. When the stand 7 is in the open orientation, the game device 2 thus stands on a placement surface 93 in a self-supporting manner with the second side surface 4D of the housing 4 and the pivotally movable end 71 of the stand 7 in contact with the placement surface 93. The game device 2 may not be designed to stand in a self-supporting manner.

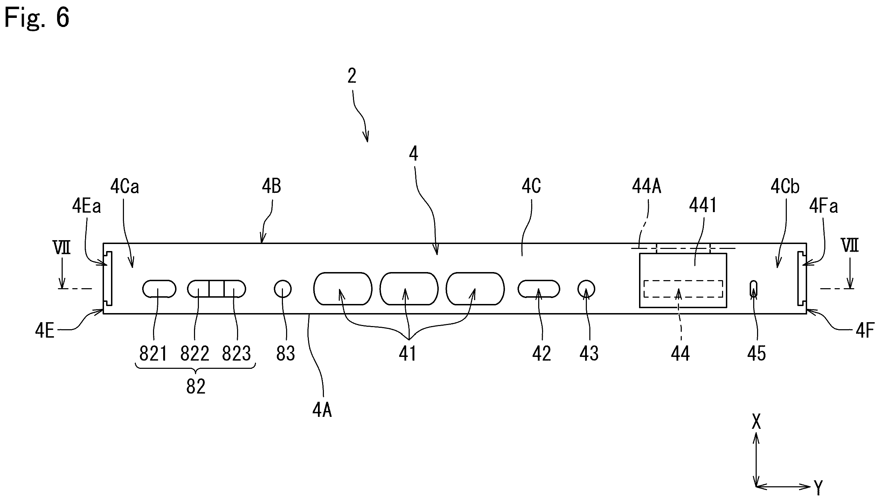

Fig. 6 is a schematic plan view of the game device according to the embodiment of the present disclosure. Fig. 7 is a cross-sectional view taken along line VII-VII in Fig. 6.

As shown in Fig. 6, the housing 4 has multiple openings in the first side surface 4C. For example, the multiple openings include air vents 41, a first connector opening 42, an audio-terminal receiving opening 43, a card-slot opening 44, a microphone opening 45, openings through which operation buttons 82 are exposed to the outside, and an opening through which an optical sensor 83 is exposed to the outside. The multiple openings connect the outside and the inside of the housing 4. Each opening may not be located in the first side surface 4C, and may be located in another surface (the front surface 4A, the back surface 4B, the second side surface 4D, the third side surface 4E, or the fourth side surface 4F). The game device 2 may not include one or more of the multiple openings.

As shown in Fig. 7, the housing 4 includes multiple components in the internal space, in addition to the display 5 described above. For example, the multiple components include the board 81, the operation buttons 82, the optical sensor 83, a fan 84, an internal connector 85, an audio terminal connector 86, a card slot 87, and a sound collector 88.

The multiple components in the internal space of the housing 4 will now be described. The relative positions of the multiple components and the multiple openings on the first side surface 4C of the housing 4 in the Y-direction will be described after each component is described.

The board 81 receives various electronic components, such as a central processing unit (CPU) and a memory. The various electronic components control the game device 2. The board 81 is electrically connected to the display 5, the first operation device 61, and the second operation device 62 described above.

The operation buttons 82 are pressed by a user to operate the game device 2. In the present embodiment, the operation buttons 82 include a power button 821 and volume buttons 822 and 823. The power button 821 and the volume buttons 822 and 823 are electrically connected to the board 81 with a flexible printed circuit (FPC) 89.

As shown in Fig. 6, the power button 821 and the volume buttons 822 and 823 are exposed to the outside of the game device 2 through openings in the first side surface 4C. In other words, the operation buttons 82 are located on the first side surface 4C. This allows the power button 821 and the volume buttons 822 and 823 to be pressed by the user.

The game device 2 in a power-off state is activated when the power button 821 is pressed. The game device 2 in a power-on state is shut down when the power button 821 is pressed.

When the volume button 822 is pressed, the volume of sound output from a speaker (not shown) incorporated in the game device 2 is decreased. When the volume button 823 is pressed, the volume of sound output from the speaker is increased.

The operation buttons 82 may include any number of buttons of any types. For example, the operation buttons 82 may include a button for adjusting the brightness of the display 5, in addition to the power button 821 and the volume buttons 822 and 823.

The optical sensor 83 is exposed to the outside of the game device 2 through an opening in the first side surface 4C. In other words, the optical sensor 83 is located on the first side surface 4C. The optical sensor 83 detects light from outside the game device 2. As shown in Fig. 7, the optical sensor 83 is electrically connected to the board 81 with the FPC 89.

The fan 84 shown in Fig. 7 is driven to circulate air through the internal space of the housing 4. The fan 84 is electrically connected to the board 81 with a connector 841.

The fan 84 is adjacent to the three air vents 41 in the first side surface 4C of the housing 4. The air circulated by the fan 84 in the internal space of the housing 4 flows out of the housing 4 through the three air vents 41. In the present embodiment, the fan 84 causes air to flow out, and the three air vents 41 function as outlets. The fan 84 may draw air from the outside to the inside of the housing 4. In this case, the three air vents 41 may function as inlets. In other words, air flows between the inside and the outside of the housing 4 through the three air vents 41. The number of air vents 41 is not limited to three.

The internal connector 85 shown in Fig. 7 is connectable to an external connector 91 through the first connector opening 42 in the first side surface 4C of the housing 4. The internal connector 85 is electrically connected to the board 81. In the present embodiment, the internal connector 85 is a Universal Serial Bus (USB, registered trademark) Type-C connector, but may be other than a USB connector. The internal connector 85 is electrically connected to the board 81.

The audio terminal connector 86 shown in Fig. 7 is connectable to an audio input-output terminal 921 through the audio-terminal receiving opening 43 in the first side surface 4C of the housing 4. In other words, the audio-terminal receiving opening 43 receives the audio input-output terminal 921. In the present embodiment, the audio input-output terminal 921 is a terminal for headphones 92, but may be any other terminal. For example, the audio input-output terminal 921 may be a terminal for earphones or for a headset. The audio terminal connector 86 is electrically connected to the board 81.

The card slot 87 shown in Fig. 7 receives a card through the card-slot opening 44 in the first side surface 4C of the housing 4. In the present embodiment, the card is, for example, a game card storing a game program to be executed on the game device 2, but may be any other card. For example, the card may be a memory card that can store any data, such as an SD memory card. The card slot 87 is electrically connected to the board 81.

In the present embodiment, as shown in Fig. 6, a lid 441 is located on the first side surface 4C to cover the card-slot opening 44. The lid 441 is supported by the first side surface 4C in a manner pivotable about a pivot axis 44A. The lid 441 is pivotable between a closed position to cover the card-slot opening 44 (the position shown in Fig. 6) and an open position to expose the card-slot opening 44 to the outside of the housing 4.

The sound collector 88 shown in Fig. 7 is adjacent to the microphone opening 45 in the first side surface 4C of the housing 4. The sound collector 88 includes a microphone 881. The structure of the sound collector 88 will be described in detail later. The microphone 881 collects sound from outside the housing 4 through the microphone opening 45. In other words, the microphone opening 45 exposes the microphone 881 to the outside of the housing 4.

The relative positions of the multiple components and the multiple openings on the first side surface 4C of the housing 4 in the Y-direction will now be described with reference to Fig. 6. The multiple components are the operation buttons 82 (the power button 821 and the volume buttons 822 and 823) and the optical sensor 83. The multiple openings are the air vents 41, the first connector opening 42, the audio-terminal receiving opening 43, the card-slot opening 44, and the microphone opening 45.

As shown in Fig. 6, the multiple components and the multiple openings are arranged in the Y-direction in the order described below. More specifically, among the multiple components and the multiple openings, the operation buttons 82, the optical sensor 83, the air vents 41, the first connector opening 42, the audio-terminal receiving opening 43, the card-slot opening 44, and the microphone opening 45 are arranged in this order from a position closer to the first end 4Ca. Among the operation buttons 82, the power button 821, the volume button 822, and the volume button 823 are arranged in this order from a position closer to the first end 4Ca in the Y-direction. The multiple components and the multiple openings arranged in the above order achieve the structure below.

The air vents 41 are located between the microphone opening 45 and the operation buttons 82 in the Y-direction, which is the longitudinal direction of the first side surface 4C. The air vents 41 are located between the card-slot opening 44 and the operation buttons 82. In other words, the air vents 41 are located between the operation buttons 82 and the microphone opening 45 and between the operation buttons 82 and the card-slot opening 44. The air vents 41 may be located in the back surface 4B. In this case, the air vents 41 are at positions not overlapping the microphone opening 45 when viewed in the Z-direction. Further, the operation buttons 82 are at first-side positions in the Y-direction relative to the air vents 41. The microphone opening 45 is at a second-side position in the Y-direction relative to the air vents 41.

The card-slot opening 44 is located between the microphone opening 45 and the air vents 41 in the Y-direction. The card-slot opening 44 may not be located between the microphone opening 45 and the air vents 41. Instead of the card-slot opening 44, for example, a functional element such as an opening for exposing the optical sensor 83 to the outside may be located between the microphone opening 45 and the air vents 41. In addition to the card slot 87, another slot (e.g., a slot for the SD memory card described above) may be located between the microphone opening 45 and the air vents 41. The functional elements including the card slot 87 (in other words, the multiple components and the multiple openings described above) may not be located between the microphone opening 45 and the air vents 41. In this case, these functional elements may be located on the first side surface 4C between the air vents 41 and the first end 4Ca, or may be located on a surface (the front surface 4A, the back surface 4B, the second side surface 4D, the third side surface 4E, or the fourth side surface 4F) other than the first side surface 4C.

The first connector opening 42 is located between the air vents 41 and the card-slot opening 44 in the Y-direction. The first connector opening 42 may be located between the card-slot opening 44 and the microphone opening 45.

The audio-terminal receiving opening 43 is located between the air vents 41 and the card-slot opening 44 in the Y-direction. The audio-terminal receiving opening 43 may be located between the card-slot opening 44 and the microphone opening 45.

The optical sensor 83 is located between the operation buttons 82 and the air vents 41 in the Y-direction. The optical sensor 83 may be located between the air vents 41 and the microphone opening 45. The operation buttons 82 and a speaker opening (not shown) may be located between the air vents 41 and the microphone opening 45.

In the present embodiment, no operable portion is located between the microphone opening 45 and the air vents 41 in the Y-direction. The operable portion refers to a button different from the operation buttons 82, such as a button for adjusting the brightness of the display 5. The operable portion may be located on at least one of the front surface 4A, the back surface 4B, the third side surface 4E, or the fourth side surface 4F.

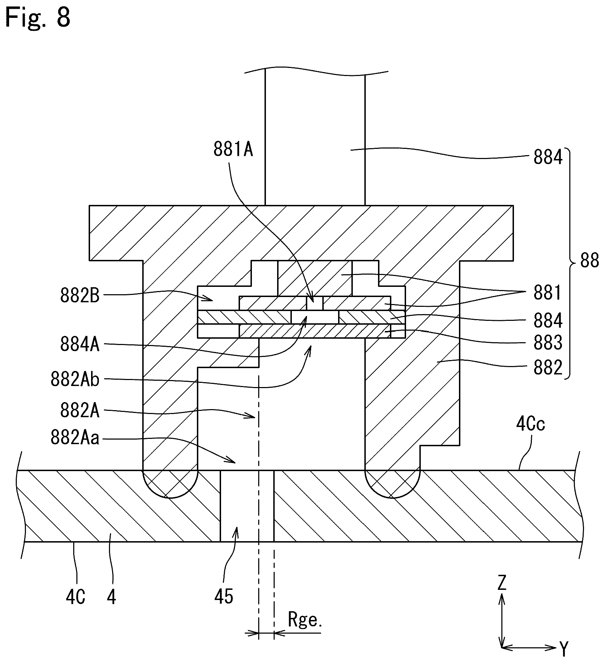

The structure of the sound collector 88 will now be described in detail with reference to Fig. 8. Fig. 8 is an enlarged view of the portion enclosed by the dashed line in Fig. 7.

As shown in Fig. 8, the sound collector 88 includes the microphone 881, a sealing rubber 882, a dustproof mesh 883, and an FPC 884.

The microphone 881 has a sound-capturing hole 881A to capture sound from outside. The FPC 884 has a through-hole 884A extending through the FPC 884 in the thickness direction. The microphone 881 is mounted on the FPC 884 with the sound-capturing hole 881A overlapping the through-hole 884A.

The dustproof mesh 883 is attached to a surface of the FPC 884 opposite to the surface of the FPC 884 on which the microphone 881 is mounted. The dustproof mesh 883 is attached to the FPC 884 to overlap the through-hole 884A. The dustproof mesh 883 thus reduces foreign matter entering the microphone 881 from outside the sound collector 88 through the through-hole 884A and the sound-capturing hole 881A.

The sealing rubber 882 includes a channel 882A and a microphone compartment 882B. The channel 882A has an outer opening 882Aa and an inner opening 882Ab. The channel 882A connects with the outside of the sealing rubber 882 through the outer opening 882Aa, and connects with the microphone compartment 882B through the inner opening 882Ab. The microphone compartment 882B connects with the outside of the sealing rubber 882 through the channel 882A.

The sealing rubber 882 is in the internal space of the housing 4. The surface of the sealing rubber 882 adjacent to the outer opening 882Aa is pressed against an inner surface 4Cc that is a surface of the housing 4 at the back of the first side surface 4C. Fig. 8 shows the sealing rubber 882 overlapping the inner surface 4Cc to indicate that the sealing rubber 882 is pressed against the inner surface 4Cc.

The outer opening 882Aa and the microphone opening 45 overlap each other when viewed in the Z-direction perpendicular to the first side surface 4C. In other words, the outer opening 882Aa is an opening of the channel 882A adjacent to the microphone opening 45. The channel 882A connects with the outside of the housing 4 through the microphone opening 45.

The microphone 881 and the dustproof mesh 883 are accommodated in the microphone compartment 882B. The dustproof mesh 883 covers the inner opening 882Ab. The inner opening 882Ab overlaps the through-hole 884A and the sound-capturing hole 881A when viewed in the Z-direction. In other words, the inner opening 882Ab is an opening of the channel 882A adjacent to the sound-capturing hole 881A.

Thus, the microphone 881 is exposed to the outside of the housing 4 through the microphone opening 45, the channel 882A, the dustproof mesh 883, the through-hole 884A, and the sound-capturing hole 881A.

Any foreign matter such as dust entering the housing 4 through the microphone opening 45 from outside can enter the microphone 881 through the channel 882A, the dustproof mesh 883, the through-hole 884A, and the sound-capturing hole 881A. However, the dustproof mesh 883 prevents most of such foreign matter from entering the microphone 881.

The sound-capturing hole 881A is offset from the microphone opening 45 when viewed in the Z-direction. In other words, the sound-capturing hole 881A does not overlap the microphone opening 45 when viewed in the Z-direction. The sound-capturing hole 881A is located, in the Y-direction, opposite to the air vents 41 (refer to Fig. 7) with the microphone opening 45 located between the sound-capturing hole 881A and the air vents 41. In other words, the microphone opening 45 is located between the sound-capturing hole 881A and the air vents 41 when viewed in the Z-direction.

A part of the outer opening 882Aa overlaps a part of the inner opening 882Ab in an overlap range Rge when viewed in the Z-direction. The outer opening 882Aa partially overlaps the inner opening 882Ab when viewed in the Z-direction.

The FPC 884 extends inside and outside the sealing rubber 882. A portion of the FPC 884 on which the microphone 881 is mounted is located inside the sealing rubber 882. A portion of the FPC 884 other than the portion on which the microphone 881 is mounted extends through the sealing rubber 882 in the X-direction to the outside of the sealing rubber 882. The FPC 884 extending to the outside of the sealing rubber 882 extends from the sealing rubber 882 in the Z-direction to the board 81. The microphone 881 is thus electrically connected to the board 81 with the FPC 884.

The structure of the sound collector 88 is not limited to the structure shown in Fig. 8. For example, the microphone compartment 882B may have a shape different from the shape shown in Fig. 8. For example, a microphone box accommodating the microphone 881 and having a hole may be located on an inner peripheral surface of the housing 4. The hole may connect with the microphone opening 45.

As shown in Fig. 3, the housing 4 has a second connector opening 46 in the second side surface 4D. In the present embodiment, the second connector opening 46 is recessed from the second side surface 4D in the Z-direction. The second connector opening 46 is used to electrically connect the game device 2 to the cradle 3 (described below). The second connector opening 46 is electrically connected to the board 81. The game device 2 may have no second connector opening 46.

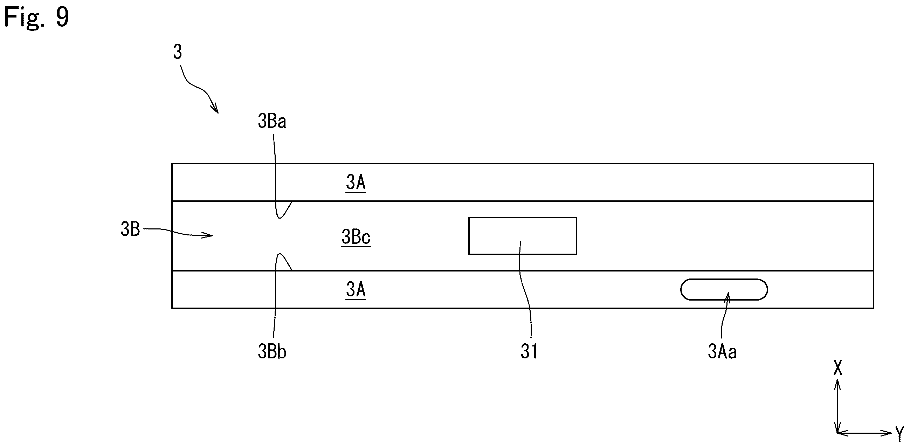

Fig. 9 is a schematic plan view of the cradle according to the embodiment of the present disclosure. The cradle 3 according to the embodiment of the present disclosure supports the game device 2 attached to the cradle 3 and is electrically connected to the game device 2 on the cradle 3. The cradle 3 according to the embodiment of the present disclosure can function as a charger that charges the game device 2 on the cradle 3. The cradle 3 according to the embodiment of the present disclosure can extend the capabilities of the game device 2 on the cradle 3. For example, the extended capabilities of the game device 2 include connection of the game device 2 to a wired local area network (LAN) with the cradle 3. The extended capabilities of the game device 2 also include, for example, allowing images on the display 5 of the game device 2 to be displayed on an external display such as a television connected to the cradle 3.

As shown in Figs. 1 and 9, the cradle 3 has a recess 3B recessed from an upper surface 3A in the Z-direction. The recess 3B extends in the Y-direction from one end to the other end of the cradle 3 in the Y-direction. The recess 3B has side surfaces 3Ba and 3Bb facing each other in the X-direction and a bottom surface 3Bc connecting the side surfaces 3Ba and 3Bb.

As shown in Fig. 9, the cradle 3 includes a connection terminal 31 on the bottom surface 3Bc of the recess 3B. In the present embodiment, the connection terminal 31 protrudes from the bottom surface 3Bc in the Z-direction. The connection terminal 31 is used to electrically connect the cradle 3 to the game device 2.

As shown in Figs. 1 and 9, the cradle 3 has a cradle air vent 3Aa in the upper surface 3A. The cradle air vent 3Aa connects the outside and the inside of the cradle 3. In other words, air flows between the inside and the outside of the cradle 3 through the cradle air vent 3Aa. In the present embodiment, the cradle air vent 3Aa functions as an outlet to allow air to flow from the inside to the outside of the cradle 3. The cradle air vent 3Aa may function as an inlet to draw air from the outside to the inside of the cradle 3. Although the cradle 3 has one cradle air vent 3Aa in Figs. 1 and 9, the cradle 3 may have any other number of cradle air vents 3Aa.

The game device 2 can be received in the recess 3B. As shown in Fig. 1, when the game device 2 is received in the recess 3B, a part of the front surface 4A of the housing 4, a part of the back surface 4B of the housing 4, and the entire second side surface 4D of the housing 4 are covered by the cradle 3. In other words, the first side surface 4C is uncovered by the cradle 3 when the game device 2 is received in the recess 3B. In the present embodiment, the part of the front surface 4A of the housing 4 is a part of the front surface 4A other than an upper part. The part of the back surface 4B of the housing 4 is a part of the back surface 4B other than an upper part. The second side surface 4D of the housing 4 may be partially covered by the cradle 3.

As shown in Fig. 1, when the game device 2 is received in the recess 3B, the front surface 4A of the housing 4 faces the side surface 3Ba of the recess 3B on the cradle 3 in the X-direction. When the game device 2 is received in the recess 3B, the back surface 4B of the housing 4 faces the side surface 3Bb of the recess 3B on the cradle 3 in the X-direction. When the game device 2 is received in the recess 3B, the second side surface 4D of the housing 4 faces the bottom surface 3Bc of the recess 3B on the cradle 3 in the Z-direction. When the game device 2 is received in the recess 3B, the connection terminal 31 (refer to Fig. 9) on the cradle 3 is received in the second connector opening 46 (refer to Fig. 3) in the second side surface 4D of the game device 2. In other words, the second connector opening 46 of the game device 2 is connected to the connection terminal 31 on the cradle 3 when the game device 2 is received in the recess 3B.

As shown in Fig. 1, the microphone opening 45 of the game device 2 is offset from the cradle air vent 3Aa of the cradle 3 in the X-direction when the game device 2 is received in the recess 3B, or in other words, when the cradle 3 is connected to the second connector opening 46. In other words, the microphone opening 45 of the game device 2 is at a position different from the position of the cradle air vent 3Aa of the cradle 3 in the X-direction when the cradle 3 is connected to the second connector opening 46. In the present embodiment, the microphone opening 45 of the game device 2 is offset from the cradle air vent 3Aa of the cradle 3 also in the Y-direction when the cradle 3 is connected to the second connector opening 46. The microphone opening 45 of the game device 2 is offset from the cradle air vent 3Aa of the cradle 3 at least in the X- and Y-directions when the cradle 3 is connected to the second connector opening 46. When the cradle 3 is connected to the second connector opening 46, the upper surface 3A of the cradle 3 having the cradle air vent 3Aa faces in the same direction as the first side surface 4C of the game device 2.

The game device 2 can produce the effects described below.

The game device includes one or more of the functional elements such as the air vents, the microphone opening, the operation buttons, and the card-slot opening. For the effective use of the space and the user convenience, the multiple functional elements may be located on a single surface of the housing of the game device. The front surface of the housing typically includes a display. Functional elements located on the front surface of the housing reduce the size of the display as compared with the functional elements located on a side surface of the housing. Multiple operation buttons located on the back surface or the bottom surface of the housing may reduce the operability. When the game device is attached to the cradle, some of the multiple side surfaces of the housing are located inside the cradle. Functional elements located on such side surfaces may be covered by the cradle. In the present embodiment, the functional elements of the game device are thus located on a single side surface of the housing other than the above side surfaces. In the structure according to the present embodiment, the functional elements such as the air vents 41, the microphone opening 45, the operation buttons 82, and the card-slot opening 44 are located on the first side surface 4C. In other words, the functional elements are concentrated on the first side surface 4C.

For many handheld game devices, a user holds the two longitudinal ends of the game device with the right and left hands. The user's hands are thus likely to be located close to the two ends of the side surface of the game device.

In the present embodiment, the operation buttons 82 are located between one of the two ends of the first side surface 4C (the first end 4Ca) and the air vents 41. The microphone opening 45 and the card-slot opening 44 are located between the other of the two ends of the first side surface 4C (the second end 4Cb) and the air vents 41. The air vents 41 can thus be located away from the first end 4Ca and the second end 4Cb. This reduces the likelihood that the user's hands are exposed to the air flowing out of the air vents 41.

In the present embodiment, the operation buttons 82 are located between the first end 4Ca and the air vents 41. The operation buttons 82 are thus located closer to the first end 4Ca than when the air vents 41 are located between the operation buttons 82 and the first end 4Ca. The operation buttons 82 can thus be easily reached by the user's hand, allowing the user to easily operate the operation buttons 82.

In the present embodiment, the card-slot opening 44 is located between the microphone opening 45 and the air vents 41. The microphone opening 45 is thus located away from the air vents 41. This allows the microphone 881 to receive less noise from the air vents 41, such as the airflow sound or the driving sound of the fan 84.

In the present embodiment, the card-slot opening 44 and the air vents 41 are located between the microphone opening 45 and the operation buttons 82. The microphone opening 45 is thus located away from the operation buttons 82. This allows the microphone 881 to receive less noise from the operation buttons 82, such as the operation sound of the operation buttons 82. With the microphone opening 45 located away from the operation buttons 82, the user's hand operating the operation buttons 82 is less likely to cover the microphone opening 45. More specifically, in the present embodiment, the operation buttons 82 are at first-side positions in the Y-direction relative to the center of the first side surface 4C, and the microphone opening 45 is at a second-side position relative to the center. When the user holding the game device 2 operates the operation buttons 82 using the thumb or fingers at first-side positions relative to the center, the thumb or fingers at the first-side positions are less likely to reach the microphone opening 45 at the second-side position relative to the center. The thumb or fingers at the first-side positions are thus less likely to cover the microphone opening 45. The user holding the game device 2 is also less likely to use the thumb or fingers at second-side positions relative to the center to operate the operation buttons 82 at the first-side positions relative to the center. The thumb or fingers at the second-side positions are thus also less likely to cover the microphone opening 45.

In the present embodiment, the card-slot opening 44 is located between the microphone opening 45 and the air vents 41. In other words, the card-slot opening 44 is located close to the microphone opening 45. The card-slot opening 44 emits less sound than the air vents 41 and the operation buttons 82. More specifically, although the card-slot opening 44 emits sound when a card is inserted into or removed from the card-slot opening 44, the insertion or removal of a card does not frequently occur while the user is, for example, playing a game on the game device 2 (during a game). In particular, when users communicate through the microphone 881 during a game, the insertion or removal of a card may less frequently occur than the operation on, for example, the operation buttons 82 or the emission of airflow sound from the air vents 41. The card-slot opening 44 thus causes less noise than the air vents 41 and the operation buttons 82 during a game. The above structure can avoid an increase in the entire noise in the sound traveling through the microphone opening 45.

In the present embodiment, no operable portion is located close to the microphone opening 45. This allows the microphone 881 to receive no noise from an operable portion, such as the operation sound of an operable portion.

To remove foreign matter from the channel 882A, for example, air may be blown into the channel 882A through the microphone opening 45. In this case, high-pressure air may enter the microphone 881 through the sound-capturing hole 881A of the microphone 881. In the present embodiment, the sound-capturing hole 881A of the microphone 881 is offset from the microphone opening 45 when viewed in the Z-direction perpendicular to the first side surface 4C. This reduces the likelihood that the sound-capturing hole 881A of the microphone 881 is exposed to high-pressure air.

In the present embodiment, a part of the outer opening 882Aa of the channel 882A overlaps a part of the inner opening 882Ab of the channel 882A when viewed in the Z-direction perpendicular to the first side surface 4C. This allows air blown through the microphone opening 45 into the channel 882A to easily reach the inner opening 882Ab. The air can thus easily spread across the entire channel 882A. This reduces remaining foreign matter in the channel 882A after air is blown.

In the present embodiment, the sound-capturing hole 881A of the microphone 881 is located, in the longitudinal direction of the first side surface 4C (Y-direction), opposite to the air vents 41 with the microphone opening 45 located between the sound-capturing hole 881A and the air vents 41. In this structure, the distance between the sound-capturing hole 881A of the microphone 881 and the air vents 41 is greater than in a structure in which the sound-capturing hole 881A of the microphone 881 is closer to the air vents 41 than the microphone opening 45 is in the Y-direction. This allows the microphone 881 to receive less noise from the air vents 41.

In the present embodiment, the card-slot opening 44 is located between the microphone opening 45 and the first connector opening 42. The microphone opening 45 is thus located away from the first connector opening 42. This allows the microphone 881 to receive less noise from the first connector opening 42, such as noise resulting from the insertion or removal of the external connector 91 into or from the first connector opening 42.

In the present embodiment, the card-slot opening 44 is located between the microphone opening 45 and the audio-terminal receiving opening 43. The microphone opening 45 is thus located away from the audio-terminal receiving opening 43. This allows the microphone 881 to receive less noise from the audio-terminal receiving opening 43, such as noise resulting from the plugging or unplugging of the headphones 92 or earphones into or from the audio-terminal receiving opening 43.

When the optical sensor 83 is located opposite to the air vents 41 with the operation buttons 82 located between the optical sensor 83 and the air vents 41, the optical sensor 83 is located between the first end 4Ca and the operation buttons 82. In this case, the optical sensor 83 is more likely to be covered by the user's hand operating the operation buttons 82. In the present embodiment, the optical sensor 83 is located between the operation buttons 82 and the air vents 41. In this case, the operation buttons 82 are located between the optical sensor 83 and the first end 4Ca. The optical sensor 83 is thus less likely to be covered by the user's hand operating the operation buttons 82 than an optical sensor 83 located between the first end 4Ca and the operation buttons 82.

In the present embodiment, the first side surface 4C is located at the top of the game device 2 standing in a self-supporting manner. The microphone 881, which is located on the first side surface 4C, receives less noise resulting from placing the game device 2 in a self-supporting manner, such as noise resulting from contact of the stand 7 with the placement surface 93. When the microphone opening 45 is located in the second side surface 4D that is at the bottom of the game device 2 standing in a self-supporting manner, the placement surface 93 may prevent easy collection of sound by the microphone 881 through the microphone opening 45. In the present embodiment, the microphone opening 45 is located in the first side surface 4C that is at the top of the game device 2 standing in a self-supporting manner. This allows the microphone 881 to collect sound more easily than when the microphone opening 45 is located in the second side surface 4D.

In the present embodiment, the microphone opening 45 is located in the first side surface 4C opposite to the second side surface 4D having the second connector opening 46 to which the cradle 3 is connected. This allows the microphone 881 in the game device 2 to receive less noise from the second connector opening 46 resulting from attaching the game device 2 to the cradle 3. When the microphone opening 45 is located in the second side surface 4D that is at the bottom of the game device 2 attached to the cradle 3, the cradle 3 may prevent easy collection of sound by the microphone 881 through the microphone opening 45. In the present embodiment, the microphone opening 45 is located in the first side surface 4C that is at the top of the game device 2 attached to the cradle 3. This allows the microphone 881 to collect sound more easily than when the microphone opening 45 is located in the second side surface 4D.

The game device 2 according to the present embodiment includes the housing 4 as a main device, and the first operation device 61 and the second operation device 62 attachable to and detachable from the housing 4. The microphone 881 is located on the main device (housing 4). The structure of the game device 2 according to the present embodiment facilitates voice communication in the example below, as compared with a structure in which the microphone 881 is located on the first operation device 61 or the second operation device 62. For example, multiple users may gather at a location and play a game on an external display such as a television displaying images, videos, or other information from the game device 2. In this case, the structure facilitates voice communication among the multiple users and one or more other users at another location connected to the location. With the microphone opening 45 located in the first side surface 4C, the microphone 881 can easily pick up ambient sound, facilitating voice communication as described above.

When users play a game on an external display such as a television displaying images, videos, or other information from the game device 2, a microphone 881 located on an operation device (the first operation device 61 or the second operation device 62) may cause wide variations in the distances of the multiple users from the operation device. An operation device connected to the main device through wireless communication may cause communication delay or packet loss and thus voice degradation. In contrast, the microphone 881 located on the main device reduces variations in the distances of the multiple users from the main device as compared with a microphone 881 located on the operation device. For example, when one of the multiple users in the same space uses an operation device including the microphone 881 and the other users use no operation device (or use operation devices including no microphone 881), the distances of the multiple users from the operation device including the microphone 881 are likely to vary. In contrast, the microphone 881 located on the main device is less likely to cause variations in the distances from the main device between the user using the operation device and the nearby users (independently of whether the nearby users are using operation devices). The microphone 881 can thus easily pick up voices from the users around the main device. With the microphone 881 located on the main device, the main device is connected to the operation device with wires. This causes less communication delay or packet loss and thus less voice degradation than when the microphone 881 is located on the operation device.

With the microphone opening 45 located in the first side surface 4C as described above, the microphone 881 can pick up ambient sound easily. The microphone 881 can thus easily pick up, for example, the voices of all the users around the game device 2.

The microphone 881 may be nondirectional. A nondirectional microphone 881 can pick up the voices of nearby users independently of the directions in which these users are located relative to the microphone 881. For example, when multiple users play a game on an external display such as a television displaying images, videos, or other information from the game device 2, the microphone 881 can pick up the voices of all the users.

In the present embodiment, the microphone opening 45 is offset from the cradle air vent 3Aa of the cradle 3 in the lateral direction (X-direction) of the first side surface 4C when the cradle 3 is connected to the second connector opening 46. In the present embodiment, the microphone opening 45 is also offset from the cradle air vent 3Aa of the cradle 3 in the longitudinal direction (Y-direction) of the first side surface 4C. This allows the microphone 881 in the game device 2 to receive less noise resulting from the airflow through the cradle air vent 3Aa of the cradle 3, such as the driving sound of a fan in the cradle 3.

In a game device set 1 in which the first side surface 4C of the game device 2 attached to the cradle 3 is covered by the cradle 3, the noise from, for example, the air vents 41 is reflected by the surface of the cradle 3 facing the first side surface 4C and is easily guided into the microphone opening 45. In the present embodiment, the first side surface 4C of the game device 2 attached to the cradle 3 is uncovered by the cradle 3. This allows the microphone opening 45 to receive less noise from, for example, the air vents 41 than in a structure in which the first side surface 4C of the game device 2 is covered by the cradle 3.

In the present embodiment, the cradle 3 may include functional portions on the surfaces that cover the front surface 4A, the back surface 4B, and the second side surface 4D of the game device 2 (the side surface 3Ba, the side surface 3Bb, and the bottom surface 3Bc of the recess 3B) to guide the game device 2 to be attached to the cradle 3. This allows smooth attachment of the game device 2 to the cradle 3.

### EXPLANATION OF REFERENCES

- 2: game device
- 3: cradle
- 3Aa: cradle air vent
- 4: housing
- 4A: front surface
- 4B: back surface
- 4C: first side surface
- 4Ca: first end
- 4Cb: second end
- 4D: second side surface
- 4E: third side surface
- 4F: fourth side surface
- 41: air vent
- 42: first connector opening
- 43: audio-terminal receiving opening
- 44: card-slot opening
- 45: microphone opening
- 46: second connector opening
- 5: display
- 61: first operation device
- 61A: side surface
- 613: side operation button
- 62: second operation device
- 62A: side surface
- 623: side operation button
- 7: stand
- 71: pivotally movable end
- 82: operation button
- 83: optical sensor
- 881: microphone
- 881A: sound-capturing hole
- 882A: channel
- 882Aa: outer opening
- 882Ab: inner opening

## Claims

1. A game device, comprising:
a housing having
a front surface on which a display is located,
a back surface spaced from the front surface in a depth direction and facing away from the front surface, the depth direction being perpendicular to the front surface,
a first side surface connecting the front surface and the back surface, and
a second side surface connecting the front surface and the back surface, spaced from the first side surface in a height direction, and facing away from the first side surface, the height direction being perpendicular to the depth direction; and
a microphone located in the housing, wherein
the first side surface or the back surface of the housing has an air vent to allow air to flow between an inside and an outside of the housing,
the first side surface has a microphone opening to expose the microphone to the outside of the housing,
the first side surface includes an operation button,
the first side surface has a card-slot opening,
the air vent is located between the microphone opening and the operation button and between the card-slot opening and the operation button in a longitudinal direction of the first side surface, and
the card-slot opening is located between the microphone opening and the air vent in the longitudinal direction of the first side surface.

2. The game device according to claim 1, wherein
the game device includes, between the microphone opening and the air vent in the longitudinal direction of the first side surface, no operable portion other than the operation button.

3. The game device according to claim 1, wherein
the microphone has a sound-capturing hole to capture sound,
the game device further comprises a channel connecting the microphone opening and the sound-capturing hole,
the sound-capturing hole is offset from the microphone opening when viewed in a direction perpendicular to the first side surface, and
the channel has an outer opening adjacent to the microphone opening and an inner opening adjacent to the sound-capturing hole, and a part of the outer opening overlaps a part of the inner opening when viewed in the direction perpendicular to the first side surface.

4. The game device according to claim 1, wherein
the microphone has a sound-capturing hole to capture sound, and
the sound-capturing hole is located, in the longitudinal direction of the first side surface, opposite to the air vent with respect to the microphone opening .

5. The game device according to claim 1, wherein:
the first side surface of the housing has a first connector opening connectable to an external connector, and
the first connector opening is located between the air vent and the card-slot opening in the longitudinal direction of the first side surface.

6. The game device according to claim 1, wherein:
the first side surface of the housing has an audio-terminal receiving opening to receive an audio input-output terminal, and
the audio-terminal receiving opening is located between the air vent and the card-slot opening in the longitudinal direction of the first side surface.

7. The game device according to claim 1, wherein:
the first side surface of the housing includes an optical sensor , and
wherein the optical sensor is located between the operation button and the air vent in the longitudinal direction of the first side surface.

8. The game device according to claim 1, further comprising:
a stand supported by the back surface in a pivotable manner,
wherein the stand is pivotable to be in an open orientation in which a pivotally movable end of the stand is away from the back surface, and
when the stand is in the open orientation, the game device stands on a placement surface in a self-supporting manner with the second side surface and the pivotally movable end of the stand in contact with the placement surface.

9. The game device according to claim 1, further comprising:
a first operation device and a second operation device attachable to and detachable from the housing,
wherein the housing has
a third side surface connecting the front surface and the back surface and connecting a first end of the first side surface in the longitudinal direction and a first end of the second side surface, and
a fourth side surface connecting the front surface and the back surface and connecting a second end of the first side surface in the longitudinal direction and a second end of the second side surface,
the first operation device is attachable to and detachable from the third side surface,
the second operation device is attachable to and detachable from the fourth side surface,
the first operation device includes a first operation button on a first adjacent surface, and the first adjacent surface is a surface of the first operation device adjacent to the first end of the first side surface when the first operation device is attached to the third side surface, and
the second operation device includes a second operation button on a second adjacent surface, and the second adjacent surface is a surface of the second operation device adjacent to the second end of the first side surface when the second operation device is attached to the fourth side surface.

10. The game device according to claim 1, wherein:
the second side surface of the housing has a second connector opening connectable to a cradle.

11. The game device according to claim 10, wherein
when the cradle including a cradle air vent to allow air to flow between an inside and an outside of the cradle is connected to the second connector opening, the microphone opening is offset from the cradle air vent in a lateral direction of the first side surface.

12. The game device according to claim 11, wherein
the first side surface faces in a same direction as the cradle air vent when the cradle is connected to the second connector opening.

13. The game device according to claim 10, wherein
when the cradle is connected to the second connector opening, at least a part of the front surface, at least a part of the back surface, and at least a part of the second side surface are covered by the cradle.
